# EUROPÄISCHE PATENTSCHRIFT

(11) **EP 1 506 906 B1**
(45) Veröffentlichungstag und Bekanntmachung des Hinweises auf die Patenterteilung: **01.12.2010**
(21) Anmeldenummer: 04018346.9
(22) Anmeldetag: 03.08.2004
(51) Int. Cl.: B62D 25/04, B62D 21/15

(54) **Säulenelement an einer Kraftfahrzeugkarosserie**
Pillar element of a vehicle body
Elément d'une colonne de carosserie de véhicule

(30) Priorität: 13.08.2003 DE 10337201
(43) Veröffentlichungstag der Anmeldung: 16.02.2005
(73) Patentinhaber: Volkswagen Aktiengesellschaft, 38436 Wolfsburg (DE)
(72) Erfinder: Pensky, Harald, Dr., 38102 Braunschweig (DE)

(56) Entgegenhaltungen:
- EP-A- 1 331 161
- EP-A1- 1 331 160
- US-A1- 2005 023 862

## Beschreibung

Die Erfindung betrifft ein Säulenelement an einer Kraftfahrzeugkarosserie nach dem Oberbegriff des Anspruchs 1.

Säulenelemente, wie beispielsweise B-Säulen, setzen sich überwiegend aus wenigstens einem Innenblech und einem Außenblech zusammen, die ihrerseits tiefgezogen sowie untereinander an ihren Rändern fest verbunden, vorzugsweise verschweißt sind und demgemäss ein weitestgehend geschlossenes Hohlprofil ausbilden.

Im wesentlichen dienen sie zur Abstützung der Dachstruktur des Kraftfahrzeugs und stellen des Weiteren die direkte Verbindung zur Bodengruppe desselben her.

Bekannte Gestaltungen besagter Säulenelemente verfügen über die Länge derselben gesehen über Querschnittsveränderungen, indem dieselben im oberen Anschlussbereich an die Dachstruktur und im unteren Anschlussbereich an beispielsweise äußere Längsträger, auch Schweller bezeichnet, in ihrem Querschnitt verstärkt ausgebildet sind, wobei im Bereich der Fenster im Verhältnis zum oberen und unteren Anschlussbereich der Querschnitt geringer ausgeführt ist.

Im Falle eines Seitencrashs wird sich ein betroffenes Säulenelement in seinem mittleren Bereich, auch als festigkeitsunstetiger Bereich bezeichnet, nach innen in die Fahrgastzelle bewegen, welches zu vermeiden gilt.

In der Praxis werden die verschiedensten Lösungen vorgeschlagen, um ein Einknicken des Säulenelementes in seinem, für Fahrzeuginsassen kritischen mittleren Bereich zu vermeiden.

Danach wird durch die EP 1 180 470 A1 vorgeschlagen, das Werkstoffgefüge des Säulenfußes einer B-Säule durch Wärmebehandlung mit einer hohen Duktilität und oberhalb dieses Bereiches ein Werkstoffgefüge mit hoher Festigkeit einzustellen. Hierdurch soll ein optimales Crashverhalten der B-Säule realisierbar sein, da der Säulenfuß infolge der eingestellten hohen Duktilität eher als der obere Bereich dazu neigt, unter der Einwirkung von äußeren Kräften ohne Rissbildung sich bleibend zu verformen.

Diese Maßnahme mag sicherlich den gewünschten Erfolg bringen, jedoch wird diese als äußerst aufwendig und kostenintensiv eingeschätzt.

Eine gleichgelagerte Entwicklungsrichtung wird mit der EP 0 816 520 B1 beschritten, wobei auch hier durch gezielte Wärmebehandlungen ein kontinuierlich sich änderndes Festigkeitsverteilungsprofil gebildet werden soll, nämlich mittig der B-Säule ein hohe Festigkeit vorgesehen wird, die zu den Enden hin kontinuierlich abnimmt.

Des Weiteren ist es bekannt, festigkeitsunstetige Bereiche an Motorhauben zu schaffen, indem versteifende Spriegel durch Langlöcher für gezielte Deformationen der Motorhaube im Falle eines Zusammenpralls mit beispielsweise einem Fußgänger geschwächt ausgebildet werden (DE 101 09 663 A1).

Ferner ist es aus der DE 33 34 446 A1 bekannt, das Bodenblech eines Kraftfahrzeugs seitlich einer Reserveradmulde mit Langlöchern auszubilden, um im Crashfäll die Reserveradmulde samt Reserverad von den seitlichen Längsträgern zu entkoppeln.

Weiter ist es aus der DE 195 31 957 A1 bekannt, in der B-Säule zur Erzeugung eines bestimmten Verformungsmusters respektive zur Einstellung der Festigkeit derselben ein relativ groß dimensioniertes sogenanntes Abstimmungsloch bzw. Montageloch vorzusehen.

Zwar wird mit dieser Maßnahme der Querschnitt der B-Säule im betreffenden Bereich geschwächt, jedoch besteht die Gefahr, dass im Crashfall die B-Säule gerade in diesem Bereich reißt bzw. regelrecht kollabiert und sich nicht mehr an der Absorption einwirkender Kräfte beteiligen kann.

Weiterhin offenbart die EP 1 331 161 A1 ein Säulenelement an einer Kraftfahrzeugkarosserie zur Abstützung einer Dachstruktur, mit einem Innenblech und einem Außenblech sowie einem dazwischen angeordneten Verstärkungsblech. Sowohl das Außenblech als auch das Verstärkungsblech weisen festigkeitsunstetige Bereiche auf, indem in dieselben Sicken eingearbeitet sind, die ein definiertes Falten des Säulenelementes im Falle eines Seitencrashes gestatten.

Eine zur vorbeschriebenen Lösung ähnliche Lösung wird durch die US 2005/023662 A1 offenbart, wobei hier ein Säulenelement vorgeschlagen wird, bei der ein unterer, mittels Sicken bewirkter festigkeitsunstetiger Bereich mit einer nach außen gekrümmten Kontur des Säulenelementes kombiniert ist, um im Fall eines Seitencrashes nachteilige Deformationen in die Fahrgastzelle hinein zu vermeiden.

Aufgabe der Erfindung ist es, in Verbesserung des Standes der Technik ein einfaches und kostengünstiges Säulenelement an einer Kraftfahrzeugkarosserie zu schaffen, welches im Crashfall, insbesondere bei einem Seitencrash, weitestgehend seine Schutzfunktion für die Insassen der Fahrgastzelle vornehmlich oberhalb des Fußbereiches beibehält und fernerhin geeignet ist, Crashenergie wirkungsvoll zu absorbieren respektive in benachbarte Karosseriebauteile einzuleiten.

Ausgehend von einem Säulenelement an einer Kraftfahrzeugkarosserie zur Abstützung einer Dachstruktur, mit wenigstens einem Innen blech und einem Außenblech, welche an ihren Rändern, ein weitestgehend geschlossenes Hohlprofil ausbildend, fest verbunden sind, wobei das Säulenelement zumindest in seinem unteren Abschnitt respektive im Säulenfuß in seiner Steifigkeit verringert ist, wird die gestellte Aufgabe dadurch gelöst, dass eine oder mehrere, die Steifigkeit des Säulenelementes im betroffenen Abschnitt des Außenbleches des Säulenelementes definiert verringernde schlitzförmige Aussparungen vorgesehen sind, deren größte Ausdehnung in Längsrichtung des Säulenelementes respektive vertikal gerichtet ist.

In besonders vorteilhafter Ausgestaltung der Erfindung sind die Aussparungen derart ausgebildet, dass dieselben infolge einer bestimmten in Fahrzeugquerrichtung auf das Säulenelement einwirkenden Kraftkomponente "F" eine solche Verformung des Säulenfußes bewirken, dass in Längsrichtung oder weitestgehend in Längsrichtung des Säulenelementes gerichtete gegenüberliegende Stirnkanten oder Stirnkantenabschnitte der Aussparungen nach Art eines Fließgelenkes aneinander vorbei gleiten.

Des Weiteren wird vorgeschlagen, dass eine oder mehrere Stirnkanten und/oder Stirnkantenabschnitte der Aussparungen geradlinig oder gekrümmt respektive gerundet ausgebildet sind. Als zweckmäßig wird des Weiteren angesehen, dass gegenüberliegend angeordnete Stirnkanten eines oder mehrerer Aussparungen wenigstens abschnittsweise zueinander querversetzt ausgebildet sind. Die Anzahl der Aussparungen, die Verteilung derselben im Bereich des Säulenfußes und ggf. darüber hinaus und die Abmaße der Aussparungen sind ferner derart gewählt, dass während der Verformung des Säulenfußes Risse im Profilmaterial und/oder ein Zusammenbrechen der Säulenstruktur weitestgehend vermieden werden. Vorstehende Erfindung ist besonders geeignet, an einem Säulenelement in Form einer B-Säule Anwendung zu finden.

Das vorgeschlagene Säulenelement hat im Hinblick auf herkömmliche den wesentlichen Vorteil, dass mit äußerst geringem Aufwand ein wirkungsvoller Insassenschutz oberhalb des Fußbereiches erzielbar ist, indem die Deformation des Säulenelementes infolge eines Seitencrashs vornehmlich auf den Fußbereich konzentriert und die Belastung auf den Anbiridungsflarisch des Säulenelementes zum benachbarten Bauteil der Bodengruppe des Kraftfahrzeugs, wie einem äußeren Längsträger (Schweller), minimiert wird. In überraschender Weise konnte durch die erfindungsgemäße Maßnahme eine Anstoßkraft "F" in Fahrzeugquerrichtung (y-Richtung) in eine Umformung des unteren Bereiches des Säulenelementes in Fahrzeuglängsrichtung (x-Richtung) umgesetzt werden. Ferner war im Rahmen von umfangreichen Versuchen festzustellen, dass den Widerstand gegen besagte Anstoßkraft "F" mindernde Rissbildungen weitestgehend vermieden werden konnten und die Stabilität des Säulenelementes insbesondere oberhalb des Fußbereiches weitestgehend erhalten blieb.

Die Erfindung wird nachstehend anhand eines in den Zeichnungen schematisch dargestellten Ausführungsbeispieles näher erläutert. Es zeigen:
- Figur 1: die schematische Seitenansicht des Rohbaus der Fahrgastzelle eines Kraftfahrzeugs mit einer erfindungsgemäß ausgebildeten B-Säule,
- Figur 2: die Einzelansicht der B-Säule nach Fig. 1 (Draufsicht, Seitenansicht / Ansicht "A", Einzelheit "Z") zum Zeitpunkt t₀ in einer Situation unmittelbar vor dem Auftreffen einer einen Seitencrash simulierenden Barriere auf den Fußbereich der B-Säule während einer repräsentativen Versuchsdurchführung,
- Figur 3: die Einzelansicht besagter B-Säule (Draufsicht, Seitenansicht / Ansicht "A", Einzelheit "Z") zum Zeitpunkt t₁ in einer Situation zu Beginn der Einwirkung einer bestimmten Kraftkomponente "F" auf die B-Säule infolge des simulierten Seitencrashs,
- Figur 4: die Einzelansicht besagter B-Säule (Draufsicht, Seitenansicht / Ansicht "A", Einzelheit "Z") zu einem fortgeschrittenem Zeitpunkt tₙ.

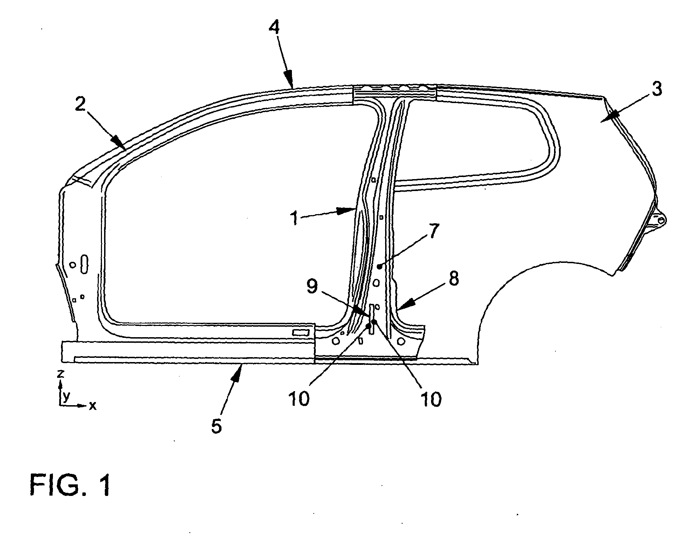

Fig. 1 zeigt, wie bereits oben dargetan, äußerst schematisch die Seitenansicht des Rohbaus der Fahrgastzelle eines Kraftfahrzeugs. Im Detail ist ein mittleres Säulenelement 1 in Form einer B-Säule gezeigt, die ihrerseits unter Einbeziehung vorderer und hinterer Säulenelemente 2; 3 (A-, C-Säulen) eine Dachstruktur 4 abstützt und wenigstens an einem Bauteil der Bodengruppe 5 des Kraftfahrzeugs, vorliegend an einem unteren äußeren Längsträger derselben, welches ein Schweller sein kann, angeschlossen ist.

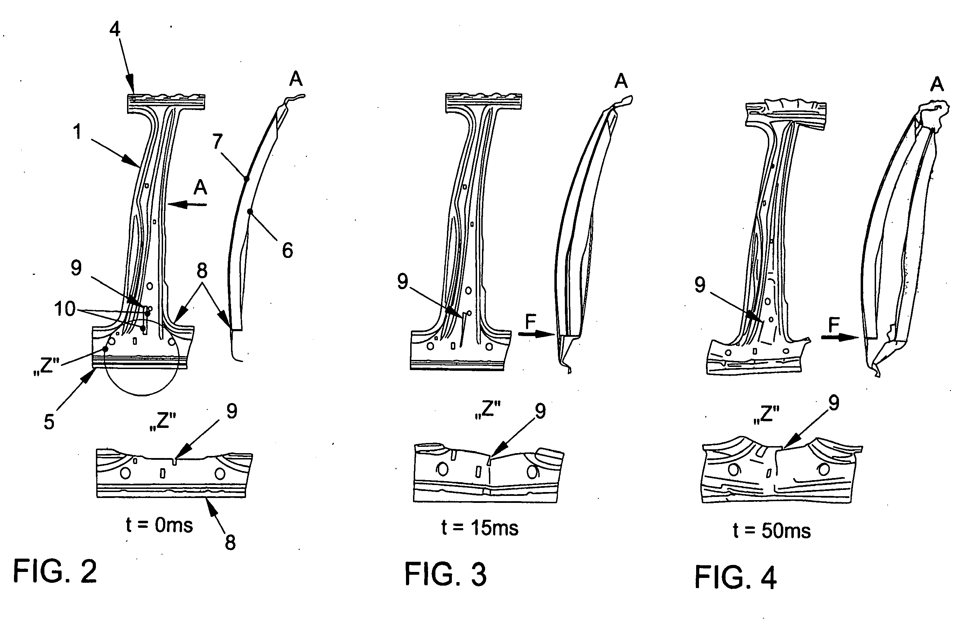

Wie aus den Fig. 2 bis 4 ersichtlich, besteht besagtes Säulenelement 1 in Form der B-Säule wenigstens aus einem Innenblech 6 und einem Außenblech 7, welche an ihren Rändern, ein weitestgehend geschlossenes Hohlprofil ausbildend, fest verbunden, vorzugsweise verschweißt sind.

Erfindungsgemäß weist das Säulenelement 1 in Form der B-Säule zumindest in seinem unteren Abschnitt des Außenbleches 7, auch als Säulenfuß 8 bezeichnet, d. h., in dem Säulenabschnitt nahe dem Anschlussbereich an die Bodengruppe des Kraftfahrzeugs, vorliegend nahe dem Anschlussbereich an den Längsträger (Schweller), in dem nach allgemeiner Lebenserfahrung während eines Seitencrashs mit einem unfallbeteiligten Kraftfahrzeug Anstoßkräfte eingeleitet werden, eine oder mehrere, die Steifigkeit des Säulenelementes 1 im betroffenen Abschnitt definiert verringernde schlitzförmige Aussparungen 9 auf.

Vorliegend ist eine Aussparung 9 gezeigt, die ihrerseits derart ausgebildet ist, dass dieselbe infolge einer bestimmten in Fahrzeugquerrichtung auf das Säulenelement 1 einwirkenden Kraftkomponente "F" eine solche Verformung des Säulenfußes 8 bewirkt, dass in Längsrichtung oder weitestgehend in Längsrichtung des Säulenelementes 1 gerichtete gegenüberliegende Stirnkanten 10 oder Stirnkantenabschnitte der Aussparung 9 nach Art eines Fließgelenkes aneinander vorbeigleiten.

Während der hierzu durchgeführten umfangreichen Versuche haben sich Aussparungen 9 im Sinne der gestellten Aufgabe besonders bewährt, deren größte Ausdehnung in Längsrichtung des Säulenelementes 1 respektive vertikal gerichtet ist.

In der einfachsten Ausführungsform der schlitzförmigen Aussparungen 9 sind deren Stirnkanten 10 geradlinig oder nahezu geradlinig ausgebildet.

Bevorzugte Ausführungsformen der schlitzförmigen Aussparungen 9 sehen demgegenüber gekrümmte respektive gerundete Stirnkanten 10 und/oder Stirnkantenabschnitte vor, so dass die Aussparungen 9 eiförmig oder auch als langgestreckte Ellipsen ausgebildet sein können (nicht näher dargestellt).

Durch diese Maßnahme werden insbesondere sich negativ auf das Verformungsverhalten des Säulenfußes 8 auswirkende Kerbspannungen reduziert oder gar vermieden.

Die Wirkung besagter Aussparungen 9 soll nachfolgend durch die Fig. 2 bis 4 näher veranschaulicht werden.

Danach zeigt Fig. 2 die Einzelansicht des Säulenelementes 1 in Form der B-Säule nach Fig. 1 in einer Draufsicht, einer Seitenansicht / Ansicht "A" sowie die Einzelheit "Z" (vergrößerte Darstellung des Säulenfußes 8) zu einem Zeitpunkt t₀, welches einer Situation unmittelbar vor dem Auftreffen einer einen Seitencrash simulierenden Barriere auf den Fußbereich des Säulenelementes 1 während einer repräsentativen Versuchsdurchführung entspricht.

Wie aus der Fig. 2 weiter ersichtlich ist, verfügt das Säulenelement 1 über eine leicht nach außen gekrümmte Struktur.

Gesetzt den Fall, eine bestimmte aus einem Seitencrash resultierende Kraftkomponente "F" (Kraft in y-Richtung) wirkt auf den Säulenfuß 8, so wird durch die vorliegend schlitzförmige Aussparung 9 gem. den Fig. 3 und 4 im Zeitraum t₁ (15ms nach Krafteinwirkung) bis tₙ (50ms nach Krafteinwirkung) eine Querkontraktion des Materials des Säulenfußes 8 ermöglicht und zwar derart, dass die in Längsrichtung des Säulenelementes 1 gerichteten und sich gegenüberliegenden Stirnkanten 10 der Aussparung 9 in x-Richtung bzw. in Fahrzeuglängsrichtung aneinander vorbei gleiten bzw. übereinander gleiten. Gleichzeitig streckt sich das Säulenelement 1 in seiner Gesamtheit.

Im Ergebnis wird dadurch ein Insassen gefährdendes Eindringen bzw. Einknicken des Säulenelementes 1 in die Fahrgastzelle wirkungsvoll behindert oder sogar verhindert. Fernerhin ist eine Minderung der Materialrissgefahr zu verzeichnen und die Absorption der Anstoßkraft und/oder die Einleitung derselben in benachbarte, die Fahrgastzelle nicht beeinträchtigende Bauteile gegeben.

Zur Unterstützung des sogenannten "Aneinandervorbeigleitens" der gegenüberliegenden Stirnkanten 10 kann es des Weiteren angezeigt sein, dieselben wenigstens abschnittsweise zueinander querversetzt auszubilden (nicht näher dargestellt).

Um die Verformung des Säulenfußes 8 in Abhängigkeit von bestimmten Randbedingungen, wie Anstoßkraft (Kraftkomponente "F"), verwendetem Material u. a. optimal einstellen zu können und insbesondere Risse im Profilmaterial und/oder ein Zusammenbrechen der Säulenstruktur weitestgehend zu vermeiden, können die Anzahl der Aussparungen 9, die Verteilung derselben im Bereich des Säulenfußes 8 und ggf. darüber hinaus und/oder die Abmaße der Aussparungen 9 in weiten Grenzen variieren.

Die Erfindung ist vorliegend anhand eines Säulenelementes 1 in Form einer B-Säule ausführlich beschrieben worden und bevorzugt für diese anwendbar.

Denkbar ist es jedoch auch und wird durch die Erfindung mit erfasst, die besondere Ausbildung des Säulenfußes 8 auch für etwaige andere Säulenelemente 2; 3 an einer Kraftfahrzeugkarosserie, bei denen in Fahrzeugquerrichtung wirkende Anstoßkräfte auf den Säulenfuß 8 abgefangen und in Verformungen desselben in Fahrzeuglängsrichtung umgesetzt werden sollen, zur Anwendung zu bringen.

### BEZUGSZEICHENLISTE

- 1: Säulenelement
- 2: Säulenelement
- 3: Säulenelement
- 4: Dachstruktur
- 5: Bodengruppe
- 6: Innenblech
- 7: Außenblech
- 8: Säulenfuß
- 9: Aussparungen
- 10: Stirnkanten

## Patentansprüche

1. Säulenelement (1) an einer Kraftfahrzeugkarosserie zur Abstützung einer Dachstruktur (4), mit wenigstens einem Innenblech (6) und einem Außenblech (7), welche an ihren Rändern, ein weitestgehend geschlossenes Hohlprofil ausbildend, fest verbunden sind, wobei das Säulenelement (1) zumindest in seinem unteren Abschnitt respektive im Säulenfuß (8) in seiner Steifigkeit verringert ist, **dadurch gekennzeichnet, dass** eine oder mehrere, die Steifigkeit des Säulenelementes (1) im betroffenen Abschnitt des Außenbleches (7) des Säulenelementes (1) definiert verringernde schlitzförmige Aussparungen (9) vorgesehen sind, deren größte Ausdehnung in Längsrichtung des Säulenelementes (1) respektive vertikal gerichtet ist.

2. Säulenelement (1) nach Anspruch 1, **dadurch gekennzeichnet, dass** die Aussparungen (9) in Längsrichtung oder weitestgehend in Längsrichtung des Säulenelementes (1) gerichtete gegenüberliegende Stirnkanten (10) oder Stirnkantenabschnitte aufweisen, welche infolge einer bestimmten in Fahrzeugquerrichtung auf das Säulenelement (1) einwirkenden Kraftkomponente "F" ein Fließgelenk ausbilden, indem während der Verformung des Säulenfußes (8) die besagten Stirnkanten (10) oder Stirnkantenabschnitte aneinander vorbei gleiten.

3. Säulenelement (1) nach einem der Ansprüche 1 oder 2, **dadurch gekennzeichnet, dass** eine oder mehrere Stirnkanten (10) und/oder Stirnkantenabschnitte der Aussparungen (9) geradlinig oder gekrümmt respektive gerundet ausgebildet sind.

4. Säulenelement (1) nach Anspruch 2 oder 3, **dadurch gekennzeichnet, dass** gegenüberliegend angeordnete Stirnkanten (10) eines oder mehrerer Aussparungen (9) wenigstens abschnittsweise zueinander querversetzt ausgebildet sind.

5. Säulenelement (1) nach einem der Ansprüche 1 bis 4, **dadurch gekennzeichnet, dass** die Anzahl der Aussparungen (9), die Verteilung derselben im Bereich des Säulenfußes (8) und ggf. darüber hinaus und die Abmaße der Aussparungen (9) derart gewählt sind, dass während der Verformung des Säulenfußes (8) Risse im Profilmaterial und/oder ein Zusammenbrechen der Säulenstruktur weitestgehend vermieden werden.

6. Säulenelement (1) nach einem der Ansprüche 1 bis 5, **dadurch gekennzeichnet, dass** das Säulenelement (1) vorzugsweise eine B-Säule ist.

## Claims

1. Pillar element (1) on a motor vehicle body for supporting a roof structure (4), with at least one inner plate (6) and one outer plate (7) which are connected fixedly at the edges thereof, forming a substantially closed hollow profile, wherein the stiffness of the pillar element (1) is reduced at least in the lower section thereof or in the pillar base (8), **characterized in that** one or more slot-shaped recesses (9) are provided, said recesses reducing the stiffness of the pillar element (1) in the section concerned of the outer plate (7) of the pillar element (1) in a defined manner and the maximum extent of which recesses is directed in the longitudinal direction of the pillar element (1) or vertically.

2. Pillar element (1) according to Claim 1, **characterized in that** the recesses (9) have opposite end edges (10) or end edge sections which are directed in the longitudinal direction or substantially in the longitudinal direction of the pillar element (1) and, as a consequence of a certain force component "F" acting on the pillar element (1) in the transverse direction of the vehicle, form a fluid joint by said edges (10) or end edge sections sliding past one another during the deformation of the pillar base (8).

3. Pillar element (1) according to either of Claims 1 and 2, **characterized in that** one or more end edges (10) and/or end edge sections of the recesses (9) are of rectilinear or curved or rounded design.

4. Pillar element (1) according to Claim 2 or 3, **characterized in that** at least sections of oppositely arranged end edges (10) of one or more recesses (9) are formed in a manner offset transversely with respect to one another.

5. Pillar element (1) according to one of Claims 1 to 4, **characterized in that** the number of recesses (9), the distribution of same in the region of the pillar base (8) and, if appropriate, beyond the latter, and the dimensions of the recesses (9) are selected in such a manner that tears in the profile material and/or collapsing of the pillar structure during the deformation of the pillar base (8) are substantially avoided.

6. Pillar element (1) according to one of Claims 1 to 5, **characterized in that** the pillar element (1) is preferably a B pillar.

## Revendications

1. Elément de colonne (1) d'une carrosserie de véhicule automobile, pour supporter une structure de toit (4), comprenant au moins une tôle intérieure (6) et une tôle extérieure (7)., qui sont connectées fixement par leurs bords, en formant un profilé creux fermé autant que possible, l'élément de colonne (1) ayant une rigidité amoindrie au moins dans sa portion inférieure respectivement dans sa base de colonne (8), **caractérisé en ce qu'**un ou plusieurs évidements (9) en forme de fente réduisant de manière définie la rigidité de l'élément de colonne (1) dans la portion concernée de la tôle extérieure (7) de l'élément de colonne (1) sont prévus, dont l'étendue maximale dans la direction longitudinale de l'élément de colonne (1) est orientée respectivement verticalement.

2. Elément de colonne (1) selon la revendication 1, **caractérisé en ce que** les évidements (9) présentent des arêtes frontales opposées (10) ou des portions d'arêtes frontales orientées dans la direction longitudinale ou autant que possible dans la direction longitudinale de l'élément de colonne (1), lesquelles constituent une rotule plastique du fait d'une composante de force "F" déterminée agissant dans la direction transversale du véhicule sur l'élément de colonne (1), **en ce que** pendant la déformation de la base de colonne (8), lesdites arêtes frontale (10) ou portions d'arêtes frontales glissent l'une devant l'autre.

3. Elément de colonne (1) selon l'une quelconque des revendications 1 ou 2, **caractérisé en ce qu'**une ou plusieurs arêtes frontales (10) et/ou portions d'arêtes frontales des évidements (9) sont réalisées sous forme rectiligne ou courbée, respectivement arrondie.

4. Elément de colonne (1) selon la revendication 2 ou 3, **caractérisé en ce que** des arêtes frontales (10), disposées de manière opposée, d'un ou de plusieurs évidements (9), sont réalisées au moins en partie de manière décalée transversalement l'une par rapport à l'autre.

5. Elément de colonne (1) selon l'une quelconque des revendications 1 à 4, **caractérisé en ce que** le nombre des évidements (9), leur répartition dans la région de la base de colonne (8) et éventuellement au-delà, et la dimension des évidements (9) sont choisis de telle sorte que pendant la déformation de la base de colonne (8), des fissures dans le matériau profilé et/ou un effondrement de la structure de la colonne soient évités autant que possible.

6. Elément de colonne (1) selon l'une quelconque des revendications 1 à 5, **caractérisé en ce que** l'élément de colonne (1) est de préférence une colonne B.
